# EUROPÄISCHE PATENTSCHRIFT

(11) **EP 1 090 233 B1**
(45) Veröffentlichungstag und Bekanntmachung des Hinweises auf die Patenterteilung: **02.04.2003**
(21) Anmeldenummer: 98966840.5
(22) Anmeldetag: 21.12.1998
(51) Int. Cl.: F16C 19/28, F16C 33/60

(54) **MEHRREIHIGES RADIALLAGER**
MULTI-ROW RADIAL BEARING
PALIER RADIAL A PLUSIEURS RANGEES

(30) Priorität: 23.06.1998 DE 19827859
(43) Veröffentlichungstag der Anmeldung: 11.04.2001
(73) Patentinhaber: INA-Schaeffler KG, 91074 Herzogenaurach (DE)
(72) Erfinder: LIPPERT, Roland, D-90768 Fürth (DE); BECKER, Christoph, D-91074 Herzogenaurach (DE)
(86) Internationale Anmeldenummer: EP9808367
(87) Internationale Veröffentlichungsnummer: WO99067543

(56) Entgegenhaltungen:
- WO-A-90/00689
- DE-A- 2 745 842
- DE-B- 1 066 814
- FR-A- 1 357 456
- FR-A- 2 246 766
- US-A- 1 970 449
- US-A- 1 995 571
- US-A- 2 029 265
- US-A- 2 334 227
- US-A- 4 558 962
- US-A- 5 332 318

## Beschreibung

### Anwendungsgebiet der Erfindung

Die Erfindung betrifft ein zweireihiges Radial-Zylinderrollenlager mit einem Innen- und einem Außenring und zugehörigen Wälzkörpern, wobei der einstückig ausgebildete Innenring mit einem Mittel- und zwei Außenborden versehen ist und der Außenring mit einem separat gefertigten, in das Lager eingesetzten Mittelbord versehen ist.

### Hintergrund der Erfindung

Ein solch gattungsgemäßes Lager ist aus der FR 2 246 766 A vorbekannt. Der Außenring ist mit einem im Querschnitt gesehen rechteckig ausgebildeten Mittelbord versehen, wobei der Mittelbord am Außenring mit Hilfe mehrerer Niete gehalten ist. Dazu müssen der Mittelbord und der Außenring mehrere am Umfang verteilt angeordnete fluchtende radiale Bohrungen aufweisen. Eine derartige Befestigung des Mittelbordes ist aufwendig und damit teuer.

### Zusammenfassung der Erfindung

Aufgabe der Erfindung ist es daher, ein gattungsgemäßes Radiallager zu entwickeln, das sich wesentlich einfacher fertigen läßt.

Erfindungsgemäß wird diese Aufgabe nach dem kennzeichnenden Teil von Anspruch 1 dadurch gelöst, daß der Mittelbord des Außenringes durch einen einstückigen T-förmig ausgebildeten, mit einem Schlitz versehenen in seinem Durchmesser veränderbaren Ring gebildet ist, der in eine umlaufende Nut eingesetzt ist, wobei der Ring aus einem in der Nut angeordneten umlaufenden äußeren Steg, der mittig oder außermittig zur Breite des Ringes angeordnet ist, und zwei in axialer Richtung gegenüberliegenden Enden besteht, die in ihrer radialen Ausdehnung in axialer Richtung nach außen zunehmen und sich an der Laufbahn des Außenringes abstützen.

Nun ist zwar in diesem Zusammenhang aus der US 2 334 227 A ein Nadellager bekannt, in dessen Außenring in einer Nut ein geschlitzter Ring eingesetzt ist. Dieser geschlitzte als axialen Anlauf dienende Ring ist nicht T-förmig ausgebildet. Er dient weiter dazu, ein Verschränken der Lagernadeln zu verhindern.

Zum einen läßt sich dieser T-förmig ausgebildete Ring aufgrund seines einfachen Querschnittprofils in relativ einfacher Weise fertigen und zum anderen ist durch die T-förmige Ausbildung ein Anlauf der Wälzkörper von beiden Seiten möglich, d.h. er kann Axialkräfte in beiden Richtungen aufnehmen. Die axiale Fixierung des Ringes selbst erfolgt durch den umlaufenden äußeren Steg, der bei der Montage in eine in der Laufbahn vorhandene Nut einschnappt. Die Montage des Ringes kann entweder durch Einspiralen, d.h. durch eine axiale Verschiebung der Ringenden zueinander oder durch ein Zusammendrücken erfolgen, wobei ein Ringende unter das andere gedrückt wird. Dadurch ergibt sich ein sehr enger Trennspalt ohne Nachteile für den Anlauf der Wälzkörper. Durch die Zunahme der radialen Ausdehnung der einander gegenüberliegenden Enden ist sichergestellt, daß die Anlauffläche für die Stirnseiten der Wälzkörper möglichst groß ist Aber auch ein erweiterter Trennspalt ist unproblematisch, da in diesem Fall der Walzkörperanlauf von zugehörigen Borden des anderen Lagerringes übernommen wird.

Aus Anspruch 2 geht hervor, daß der Schlitz parallel zu einer Lagerachse oder unter einem bestimmten Winkel zu dieser verläuft, d.h. gerade geschlitzt ist Aber auch sämtliche andere Schlitzanordnungen sind denkbar.

Nach einem weiteren Merkmal der Erfindung gemäß Anspruch 3 ist vorgesehen, daß die Außenborde des Innenringes mit einem Dichtelement versehen sein sollen.

Diese Dichtelemente sorgen in bekannter Weise dafür, daß der die Wälzkörper aufnehmende Raum gegen Schmutzeintritt und gegen Schmiermittelverlust abgedichtet werden kann. Diese kann zweckmäßigerweise beispielsweise dadurch erfolgen, daß das Dichtelement als eine schleifende Dichtung ausgebildet ist, die mit einem Ende in einer Nut in den Außenborden des Innenringes gehalten ist und deren gegenüberliegende Dichtlippe unter Vorspannung am Außenring anliegt. Genauso gut wäre es möglich, daß als Dichtelement eine Blechscheibe verwendet wird, die an einem der Lagerringe befestigt ist und mit dem anderen Lagerring einen Dichtungsspalt bildet.

Aus Anspruch 4 geht hervor, daß der Ring zur Härtesteigerung einer Wärmebehandlung unterworfen ist.

Schließlich soll nach Anspruch 5 der Ring mit einem reibungsvermindemden Stoff, beispielsweise mit Polytetrafluorethylen (PTFE) beschichtet sein. PTFE eignet sich besonders, da es von allen festen Kunststoffen den niedrigsten Reibungskoeffizienten aufweist.

Die Erfindung wird an nachstehendem Ausführungsbeispiel näher erläutert.

### Kurze Beschreibung der Zeichnungen

Es zeigen:
- Figur 1: einen teilweisen Längsschnitt durch ein erfindungsgemäßes Zylinderrollenlager;
- Figur 2: eine Seitenansicht eines geschlitzten Winkelringes und
- Figur 3: einen Längsschnitt durch einen vergrößerten Winkelring gemäß Figur 2.

### Ausführliche Beschreibung der Zeichnungen

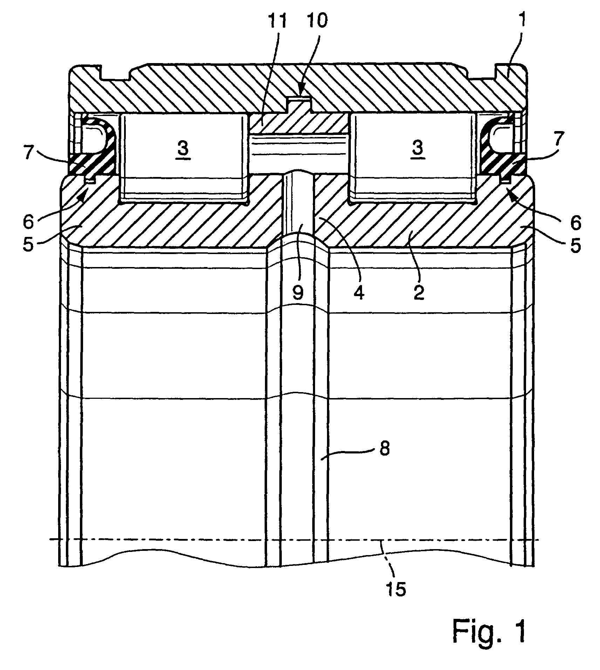

Das in Figur 1 im Halbschnitt gezeigte zweireihige Radial-Zylinderrollenlager besteht aus einem Lageraußenring 1 und einem zugehörigen Lagerinnenring 2, zwischen denen auf nicht bezeichneten Laufbahnen zwei Zylinderrollensätze 3 abwälzen. Der Lagerinnenring 2 ist mit einem Mittelbord 4 und mit zwei Außenborden 5 versehen, an denen die Zylinderrollen 3 mit ihren Stirnflächen anlaufen. Die Außenborde 5 des Innenringes 2 sind mit je einer Nut 6 versehen, in die je ein Dichtelement 7 eingesetzt ist, das mit seiner Dichtlippe an der gegenüberliegenden Lauffläche des Lageraußenringes 1 anliegt. Darüber hinaus weist der Lagerinnenring 2 eine umlaufende Schmiemut 8 auf, von der an einer Stelle in radialer Richtung eine Schmierbohrung 9 abzweigt, die in einen Raum zwischen den beiden Zylinderrollensätzen 3 mündet.

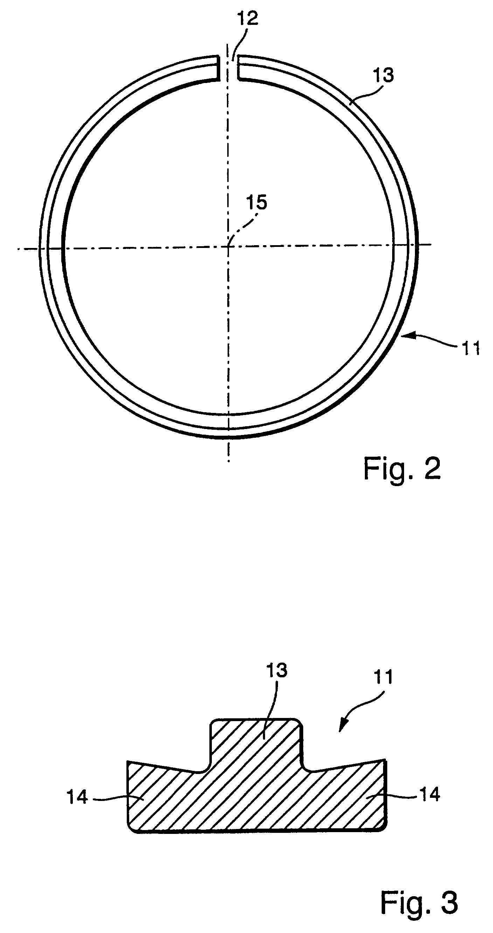

Der Lageraußenring 1 weist eine glatte Lauffläche auf und ist mittig mit einer umlaufenden Nut 10 versehen, in die ein Ring 11 eingesetzt ist. Wie die Figur 2 zeigt, ist dieser Ring 11 an einer Umfangsstelle mit einem Schlitz 12 versehen, so daß er in seinem Umfang veränderbar ist. Dieser Ring 11 ist T-förmig ausgebildet, d. h. er weist einen radial umlaufenden äußeren Steg 13 auf, der in der Nut 10 des Lageraußenringes 1 geführt ist Die beiden einander gegenüberliegenden Enden 14 des Ringes 11 stützen sich an der Laufbahn des Außenringes 1 ab und nehmen in ihrer Ausdehnung in axialer Richtung nach außen zu, so daß die Anlagefläche für die Stirnseiten der Zylinderrollen 3 vergrößert ist.

Die Montage einer solch erfindungsgemäßen Lagerung wird so vorgenommen, daß der Lageraußenring 1 axial über den vormontierten Lagerinnenring 2 mit Zylinderrollensätzen 3 und geschlitztem Ring 11 bis zu dessen Einschnappen in die Nut 10 geschoben wird. Das heißt, der geschlitzte Ring 11 muß beim Überschieben des Lageraußenringes 1 zunächst in seinem Durchmesser verkleinert werden, bis er sich nach Einschnappen in die Nut 10 wieder ausdehnen kann.

### Bezugszeichen

- 1: Lageraußenring
- 2: Lagerinnenring
- 3: Zylinderrollensatz
- 4: Mittelbord
- 5: Außenbord
- 6: Nut
- 7: Dichtelement
- 8: Schmiernut
- 9: Schmierbohrung
- 10: Nut
- 11: Ring
- 12: Schlitz
- 13: äußerer Steg
- 14: Ende
- 15: Lagerachse

## Patentansprüche

1. Zweireihiges Radial-Zylinderrollenlager mit einem Innen- (2) und einem Außenring (1) und zugehörigen Wälzkörpern (3), wobei der einstückig ausgebildete Innenring (2) mit einem Mittel- (4) und zwei Außenborden (5) versehen ist und der Außenring (1) mit einem separat gefertigten, in das Lager eingesetzten Mittelbord versehen ist, **dadurch gekennzeichnet, dass** der Mittelbord des Außenringes (1) durch einen einstückigen T-förmig ausgebildeten, mit einem Schlitz (12) versehenen in seinem Durchmesser veränderbaren Ring (11) gebildet ist, der in eine umlaufende Nut (10) eingesetzt ist, wobei der Ring (11) aus einem in der Nut (10) angeordneten umlaufenden äußeren Steg (13), der mittig oder außermittig zur Breite des Ringes (11) angeordnet ist, und zwei in axialer Richtung gegenüberliegenden Enden (14) besteht, die in ihrer radialen Ausdehnung in axialer Richtung nach außen zunehmen und sich an der Laufbahn des Außenringes (1) abstützen.

2. Zweireihiges Radiallager nach Anspruch 1, **dadurch gekennzeichnet, daß** der Schlitz (12) parallel zu einer Lagerachse (15) oder unter einem bestimmten Winkel zu dieser verläuft.

3. Zweireihiges Radiallager nach Anspruch 1, **dadurch gekennzeichnet, daß** die Außenborde (5) des Innenringes (2) mit einem Dichtelement (7) versehen sind.

4. Zweireihiges Radiallager nach Anspruch 1, **dadurch gekennzeichnet, daß** der Ring (11) einem Härtevorgang unterworfen ist.

5. Zweireihiges Radiallager nach Anspruch 1, **dadurch gekennzeichnet, daß** der Ring (11) mit einem reibungsvermindemden Stoff, beispielsweise mit Polytetrafluorethylen (PTFE) beschichtet ist

## Claims

1. Double-row radial cylindrical roller bearing having an inner ring (2), an outer ring (1) and associated rolling elements (3), the inner ring (2) being made in one piece and comprising a centre rib (4) and two outer ribs (5) while the outer ring (1) comprises a separately fabricated centre rib that is inserted into the bearing, **characterised in that** the centre rib of the outer ring (1) is constituted by a one-piece T-shaped ring (11) having a slit (12) and a variable diameter, which ring (11) is inserted into a circumferential groove (10) and comprises a circumferential outer web (13) arranged in the groove (10) at the centre of the width of the ring (11) or off-centre to the width of the ring (11), and further comprises two ends (14) situated opposite each other in axial direction, which ends increase in radial dimension in an outward axial direction and are supported on a raceway of the outer ring (1).

2. Double-row radial bearing according to claim 1, **characterised in that** the slit (12) is parallel to a bearing axis (15) or extends at a defined angle thereto.

3. Double-row radial bearing according to claim 1, **characterised in that** the outer ribs (5) of the inner ring (2) are provided with a sealing element (7).

4. Double-row radial bearing of claim 1, **characterised in that** the ring (11) is subjected to a hardening procedure.

5. Double-row radial bearing of claim 1, **characterised in that** the ring is coated with a friction-reducing material, for example, polytetrafluor ethylene (PTFE).

## Revendications

1. Roulement radial à deux rangées de rouleaux cylindriques comprenant un anneau intérieur (2), un anneau extérieur (1) et des corps roulants (3) associés, ledit anneau intérieur (2) est fait d'un seul tenant et comprend un épaulement médian (4) et deux épaulements extérieurs (5), pendant que l'anneau extérieur (1) est muni d'un épaulement médian qui est fabriqué séparément et est inséré dans le roulement, **caractérisé en ce que** l'épaulement médian de l'anneau extérieur (1) est constitué d'une bague (11) faite d'un seul tenant en forme d'un T et qui comprend une fente (12) et a un diamètre variable, ladite bague est insérée dans une rainure périphérique (10) et comprend une nervure externe périphérique (13) qui est agencée dans la rainure (10) au centre de la largeur de la bague (11) ou décalée du centre de la largeur de la bague (11), et ladite bague comprend, en outre, deux extrémités opposées (14) dans la direction axiale dont l'étendue radiale augmente en allant vers l'extérieur en direction axiale, et lesdites extrémités sont supportées sur la piste de roulement de l'anneau extérieur (1).

2. Roulement radial à deux rangées, **caractérisé en ce que** la fente (12) est parallèle à l'axe (15) du roulement, ou elle s'étend avec un angle défini à celui-ci.

3. Roulement radial à deux rangées, **caractérisé en ce que** les épaulements extérieurs (5) de l'anneau intérieur (2) sont munis d'un élément d'étanchéité (7).

4. Roulement radial à deux rangées, **caractérisé en ce que** la bague (11) est soumise à un procédé de durcissement.

5. Roulement radial à deux rangées, **caractérisé en ce que** la bague (11) est recouverte d'un matériau, par exemple polytétrafluoréthylène, qui réduit le frottement.
